# EUROPÄISCHE PATENTSCHRIFT

(11) **EP 0 686 587 B1**
(45) Veröffentlichungstag und Bekanntmachung des Hinweises auf die Patenterteilung: **21.01.1998**
(21) Anmeldenummer: 95106767.7
(22) Anmeldetag: 05.05.1995
(51) Int. Cl.: B65G 59/02

(54) **Vorrichtung und Verfahren zur Aufnahme von Artikeln**
Device and method for picking articles
Dispositif et procédé de prise d'articles

(30) Priorität: 06.06.1994 CH 1777/94
(43) Veröffentlichungstag der Anmeldung: 13.12.1995
(73) Patentinhaber: Digitron AG, CH-5000 Aarau (CH)
(72) Erfinder: Ingelhag, Anders Georg Feder, S-41319 Göteborg (SE)
(74) Vertreter: Blum, Rudolf Emil Ernst

(56) Entgegenhaltungen:
- EP-A- 0 548 545
- DE-A- 3 733 461

## Beschreibung

Die Erfindung betrifft eine Vorrichtung zur Aufnahme von Artikeln gemäss dem Oberbegriff von Anspruch 5 sowie ein Verfahren zum Betrieb einer Vorrichtung zur Aufnahme von Artikeln gemäss dem Oberbegriff von Anspruch 1.

Derartige Vorrichtungen werden zum Beispiel in automatisierten Lagerhäusern zur Bedienung von Regalen oder zur Depaletierung verwendet. Sie sollten in der Lage sein, zuverlässig und schnell grosse Mengen zum Teil unterschiedlicher Artikel zu manipulieren.

In EP-A-548 545 und DE-A-1 907 109 werden bekannte Vorrichtungen dieser Art beschrieben. Sie weisen ein Kipporgan und ein Aufnahmeorgan auf. Mit dem Kipporgan wird der aufzunehmende Artikel zuerst etwas angehoben, so dass er vom Aufnahmeorgan unterfahren werden kann. Dann wird der Artikel auf das Aufnahmeorgan geladen und die ganze Vorrichtung zieht sich mit dem nun aufgeladenen Artikel aus dem Artikelbereich zurück.

Die Geschwindigkeit solcher Vorrichtungen ist beschränkt. Mittels optimierter Aufnahmeorgane können sie typische Arbeitsfrequenzen von 220 - 250 Artikeln pro Stunde erreichen. In der Praxis sind jedoch höhere Frequenzen erwünscht.

Deshalb stellt sich die Aufgabe, eine Vorrichtung bzw. ein Verfahren der eingangs genannten Art bereitzustellen, das schneller als die bekannten Vorrichtungen arbeitet, aber möglichst ohne dass dadurch grosse Mehrkosten entstehen.

Diese Aufgabe wird durch das Verfahren rsp. die Vorrichtung gemäss den Ansprüchen 1 rsp. 5 erfüllt.

Verglichen mit früheren Verfahren arbeiten das Kipporgan und das Aufnahmeorgan nun "phaseverschoben" zueinander. Während das Aufnahmeorgan noch mit dem Aufnehmen und dem Abtransport des letzten Artikels beschäftigt ist, kann das Kipporgan bereits den nächsten Artikel zur Aufnahme vorbereiten. Dadurch wird der Durchsatz verbessert, ohne das der apparative Aufwand erhöht würde.

Vorzugsweise wird das Kipporgan mit einer Messvorrichtung zur Ausmessung der Position der aufzunehmenden Artikel versehen. Damit kann vor dem Kippen die Position des Artikels ausgemessen werden. Für diese Messung steht in der Arbeitsphase A genügend Zeit zur Verfügung.

Zur weiteren Erhöhung der Leistungsfähigkeit der Anlage kann eine Zwischenlagerstation vorgesehen sein, in welche die Artikel vom Aufnahmeorgan gelangen. Dieser Zwischenlagerstation können die Artikel in hoher Frequenz zugeführt werden. Von der Zwischenlagerstation werden vorzugsweise mehrere Artikel aufs Mal weggeführt, zum Beispiel dann, wenn die Aufnahmevorrichtung an einen neuen Aufnahmeplatz verfahren werden muss.

Die erfindungsgemässe Vorrichtung ist so ausgeführt, dass sie ein unabhängig vom Kipporgan bewegbares Halteorgan aufweist, mit welchem das Aufnehmen des Artikels auf das Aufnahmeorgan unterstützt werden kann. Auf diese Weise kann das Aufnahmeorgan seine Arbeit völlig unabhängig vom Kipporgan durchführen, was den unabhängigen Betrieb von Kipporgan und Aufnahmeorgan vereinfacht.

Um den Aufwand gering zu halten, ist das Halteorgan vorzugsweise mit dem Ausfahrantrieb des Aufnahmeorgans gekoppelt.

Die bereits erwähnte, vorzugsweise eingesetzte Zwischenlagerstation sollte möglichst vertikal verfahrbar sein, so dass sie zur Aufnahme der Pakete beim Aufnahmeorgan und zur Abgabe der Pakete bei der Abtransportvorrichtung positioniert werden kann.

Weitere Anwendungen, Vorteile und bevorzugte Ausführungen der Erfindung ergeben sich aus der nun folgenden Beschreibung anhand der Figuren. Dabei zeigen:
Figur 1 eine Gesamtansicht einer erfindungsgemässen Entladevorrichtung,
Figur 2 eine Detailansicht der Vorrichtung nach Fig. 1, und
Figuren 3 - 16 verschiedene Arbeitsphasen der Vorrichtung nach Fig. 1.

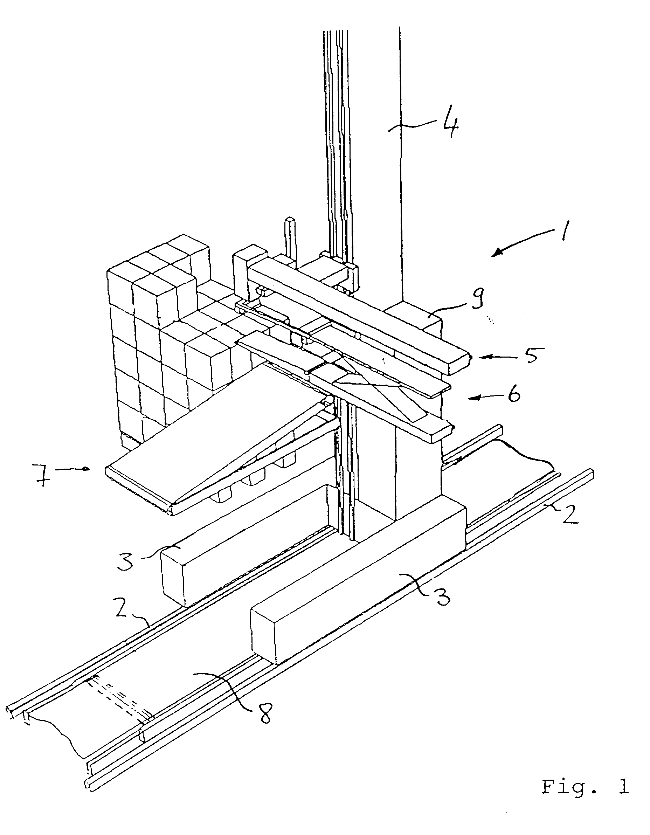

Der prinzipielle Aufbau der Vorrichtung ist aus Fig. 1 ersichtlich. Sie umfasst ein Bedienfahrzeug 1, welches auf Schienen 2 verfahrbar ist. Das Bedienfahrzeug 1 hat einem Fahrteil 3, auf welchem ein Turm 4 mit einer Höhe von z. B. 2 bis 6 Metern angeordnet ist. Am Turm 4 sind übereinander drei Einheiten angeordnet, welche unabhängig voneinander in Vertikalrichtung bewegt werden können: Zuoberst befindet sich ein Kipporgan 5, darunter das Aufnahmeorgan 6 und zuunterst das Zwischenlager 7. Der Aufbau und die Funktion dieser Einheiten wird weiter unten beschrieben.

Unterhalb des Bedienfahrzeugs und zwischen den Schienen 2 befindet sich ein Transportband 8, mit welchem die vom Bedienfahrzeug depaletierten Artikel weggeführt werden können.

Die Steuerung der Vorrichtung übernimmt vorzugsweise ein Computer, welcher zum Beispiel als dezentrale Einheit in einem Gehäuse 9 des Bedienfahrzeugs untergebracht sein kann.

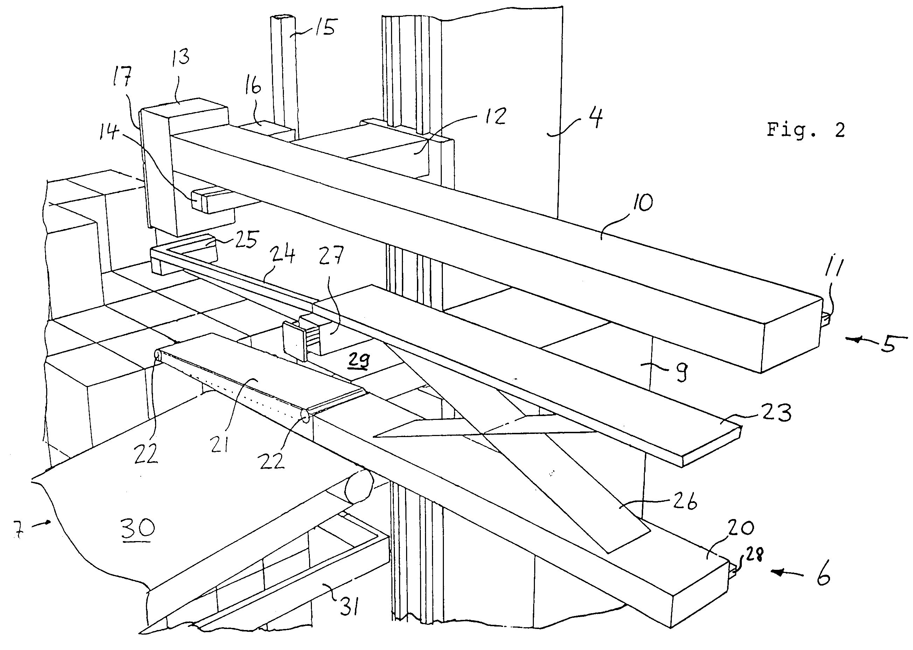

Die wichtigsten Teile des Bedienfahrzeugs werden in Figur 2 vergrössert gezeigt.

Das Kipporgan 5 umfasst einen horizontal angeordneten Träger 10, welcher mit einer Schiene 11 in einem Horizontalantrieb 12 läuft. Alternativ hierzu kann das Kipporgan 5 (wie auch das Aufnahmeorgan 6) in Teleskoptechnik ausgeführt sein.

Am Kopf des Trägers 10 ist eine Messvorrichtung 13 angeordnet, welche die Position eines unter ihr befindlichen Artikels ermitteln kann. Vorzugsweise geschieht dies mittels bekannten optischen Methoden, zum Beispiel auf Laserbasis. Ferner ist im Bereich des Kopfs des Trägers 10 ein Anstellorgan 14 vorgesehen, welches mittels eines geeigneten Antriebs horizontal und vertikal gegenüber dem Träger 10 bewegt werden kann. Von diesem Antrieb sind in Figur 2 nur der Vertikalantrieb 16 und die Schiene 15 ersichtlich - der horizontale Antrieb ist jedoch ähnlich aufgebaut. Da solche Antriebe (zum Beispiel auf pneumatischer, hydraulischer oder elektrischer Basis) dem Fachmann bekannt sind, sollen sie hier nicht näher erläutert werden.

Auf der Stirnseite der Messvorrichtung 13 ist eine Platte 17 angeordnet. Diese Platte 17 kann mittels eines nicht gezeigten Antriebs nach unten ausgefahren werden.

Unterhalb des Kipporgans befindet sich das Aufnahmeorgan 6. Dieses ruht auf einem zweiten Träger 20, welcher mit einer Schiene 28 in einem Horizontalantrieb 29 läuft und somit wie der Träger 10 horizontal verfahrbar ist. An seinem vorderen, artikelseitigen Ende ist der Täger 20 mit einem Förderband 21 ausgerüstet, welches angetrieben über die Rollen 22 läuft. Auf dem Träger 20 steht ferner ein Halteorgan 23 - 25, welches mittels einer Verstelleinrichtung 26 vertikal gegenüber dem Träger 20 bewegt werden kann. Im vorderen Teil der Halteorgans ist ein Halteteil 25 angeordnet, welcher über eine Stange 24 mit dem hinteren Teil 23 des Halteorgans verbunden ist.

Die Stange 24 ist seitlich angeordnet, damit sich der Halteteil 25 und das Anstellorgan 14 in ihren weiter unten beschriebenen Bewegungen nicht behindern.

Seitlich neben dem Aufnahmeorgan 6 befindet sich eine Ausstossvorrichtung 27, mittels welcher ein in geeigneter Position auf dem Aufnahmeorgan 6 liegender Artikel vom Förderband 21 auf das Zwischenlager 7 befördert werden kann.

Das Zwischenlager 7 besteht aus einem etwas abfallend angeordneten Förderband 30, welches an einem Rahmen 31 befestigt ist. Der Rahmen 31 ist über einen nicht gezeigten Vertikalantrieb mit dem Turm 4 verbunden.

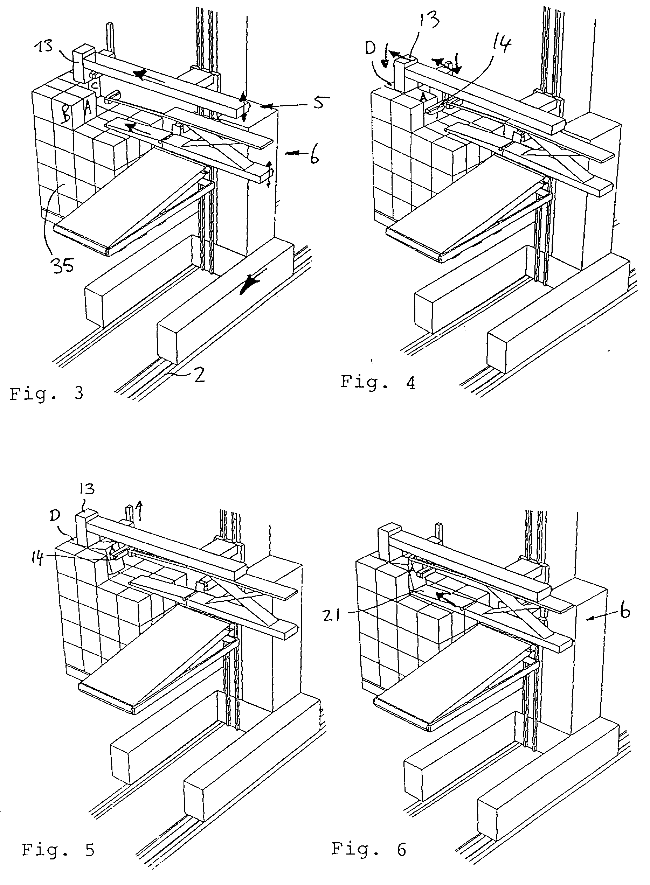

Die Funktionsweise der Vorrichtung wird nun anhand der Figuren 3 bis 16 erläutert. In diesen Figuren sind die jeweilig durchgeführten Bewegungen mit Pfeilen markiert.

Figur 3 zeigt die Maschine zu Beginn einer Aufnahmesequenz für drei Artikel A, B und C eines paletierten Stapels 35. Vor dem Start der Aufnahmesequenz muss das Bedienfahrzeug auf den Schienen 2 so verfahren werden, dass das Aufnahmeorgan 6 vor der theoretischen Position des ersten aufzunehmenden Artikels A liegt. In Vertikalrichtung wird das Aufnahmeorgan 6 so positioniert, dass es sich etwas oberhalb der Oberflächen der nächst unteren Artikel befindet. Die Höhe des Kipporgans 5 wird so eingestellt, dass die Messvorrichtung 13 sicher höher als die Oberseite des Artikels A liegt.

Sodann wird das Kipporgan 5 gegen die Artikel ausgefahren und misst mit der Messvorrichtung 13 die genaue Position des Artikels A. Nötigenfalls wird danach die Position des Bedienfahrzeugs 1 oder des Kipporgans 5 korrigiert. Gleichzeitig kann auch bereits das Aufnahmeorgan 6 etwas ausgefahren werden.

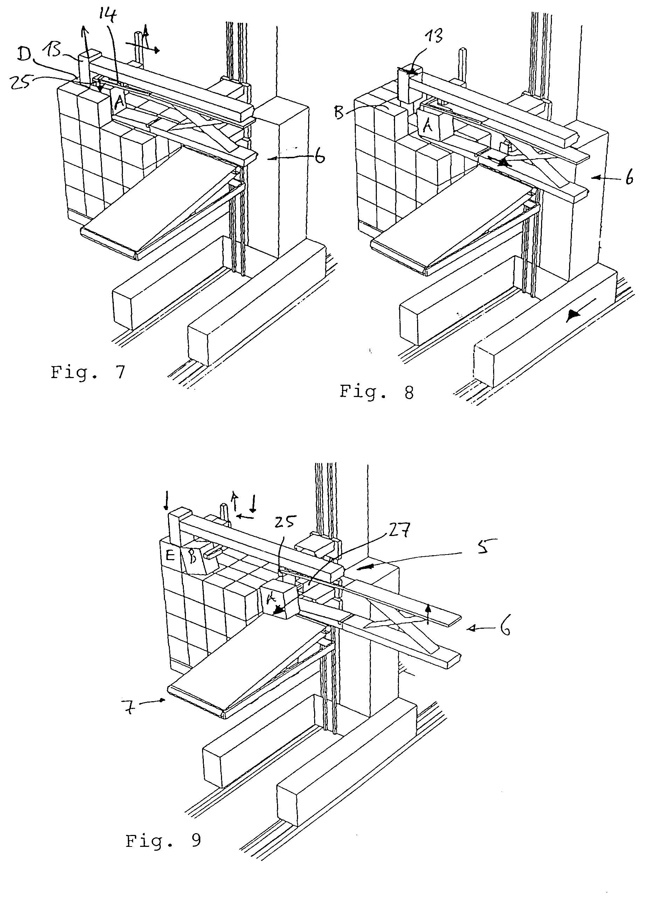

Nun wird, wie in Figur 4 gezeigt, die Messvorrichtung 13 auf den Artikel D gedrückt, der hinter dem Artikel A liegt. Das Anstellorgan 14 wird nach unten und dann nach vorne verfahren, so dass es im oberen Bereich der Vorderseite des Artikels A in Anschlag kommt. Sodann wird es, wie in Figur 5 gezeigt, wieder angehoben und dabei weiter gegen die Vorderfläche von Artikel A gedrückt. Dadurch wird aufgrund der Haftreibung zwischen dem Anstellorgan 14 und der Artikeloberfläche eine Kraft mit aufwärts gerichteter Vertikalkomponente auf den Artikel A ausgeübt, die eine Kippbewegung um dessen obere Hinterkante bewirkt. Durch die Messvorrichtung 13, die auf den Artikel D drückt und diesen somit festhält, wird verhindert, dass der Artikel A nach hinten ausweichen kann. Damit die maximalen Haftreibungskräfte möglichst gross sind, sind die Messvorrichtung und das Anstellorgan vorzugsweise mit Gummi oder dergleichen belegt.

Nun da der Artikel A etwas angehoben ist, wird, wie in Figur 6 gezeigt, das Aufnahmeorgan 6 ausgefahren, so dass dessen vorderer Teil den Artikel A mit dem Förderband 21 unterfährt. Gleichzeitig wird das Förderband so angetrieben, dass es auf der Oberseite eine der Ausfahrgeschwindigkeit entgegengesetzt gleiche Geschwindigkeit hat und also relativ zum Artikel A stillsteht.

In Figur 7 ist der Aufnahmevorgang weiter fortgeschritten. Sobald das Aufnahmeorgan 6 in den Spalt unter den Artikel A eingefahren ist, wird das Anstellorgan nicht mehr benötigt und kann zurück und nach oben gefahren werden. Hat das Aufnahmeorgan seine maximale Ausfahrstellung erreicht, so wird das Halteorgan 25 von oben auf den Artikel A abgesenkt und hält diesen fest. Nun kann Artikel D losgelassen werden, indem die Messvorrichtung 13 angehoben wird.

Jetzt wird das Aufnahmeorgan 6 mit dem Artikel A bei stillstehendem Tansportband zurückgefahren (Fig. 8). Gleichzeitig wird das Bedienfahrzeug seitlich zur erwarteten Position des nächsten aufzunehmenden Artikels B verfahren. Die Messvorrichtung 13 wird über diesen Artikel B geführt und vermisst dessen genaue Position.

Sodann wird die Messvorrichtung auf den Artikel E abgesenkt, der hinter B liegt, und hält ihn fest. Das Anstellorgan 14 wird wieder abgesenkt, an die obere Vorderseite des Artikels B gedrückt und angehoben, was eine Kippung des Artikels B bewirkt (Fig. 9). Während sich das Kipporgan 5 bereits mit dem Artikel B beschäftigt, wird das Aufnahmeorgan 6 soweit zurückgezogen, dass der Artikel A neben die Ausstossvorrichtung 27 zu liegen kommt. Sobald er diese Abgabeposition erreicht hat, wird das Halteorgan 25 angehoben und die Ausstossvorrichtung 27 schiebt den Artikel A auf das Zwischenlager 7.

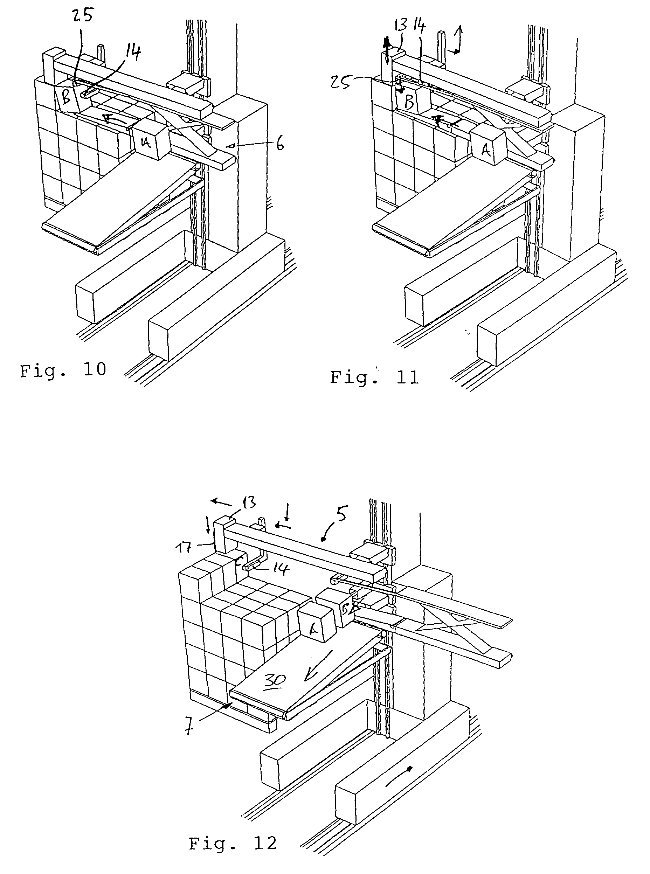

Nun wird die Aufnahmevorrichtung 6 wieder ausgefahren und unterfährt den angehobenen Artikel B (Fig. 10). Das Anstellorgan 14 wird wieder zurück- und hochgefahren. Sobald der Artikel ganz unterfahren ist, wird das Halteorgan 25 abgesenkt und der Artikel gefasst. Die Messvorrichtung 13 wird angehoben (Fig. 11).

In einem nächsten Schritt (Fig. 12) muss ein Artikel C aufgenommen werden, der in der hintersten Artikelreihe liegt. Hierzu wird das Bedienfahrzeug 1 auf den Schienen 2 verfahren, so dass das Aufnahmeorgan 6 vor diesen Artikel C gelangt. Gleichzeitig wird der Artikel B zur Abgabeposition bewegt, wo er auf das Zwischenlager 7 geschoben wird. Dessen Förderband 30 wird in Betrieb gesetzt, um den Artikel A etwas nach unten zu bewegen und für den Artikel B Platz zu machen. Gleichzeitig wird die Messvorrichtung 13 über den Artikel C bewegt und misst dessen Position. Dann wird die Platte 17 hinter den Artikel C nach unten ausgefahren. Das Anstellorgan 14 wird an die Vorderseite von Artikel C gedrückt. Dank dem Rückhalt durch die Platte 17 wird dabei ein Ausweichen des Artikels nach hinten verhindert.

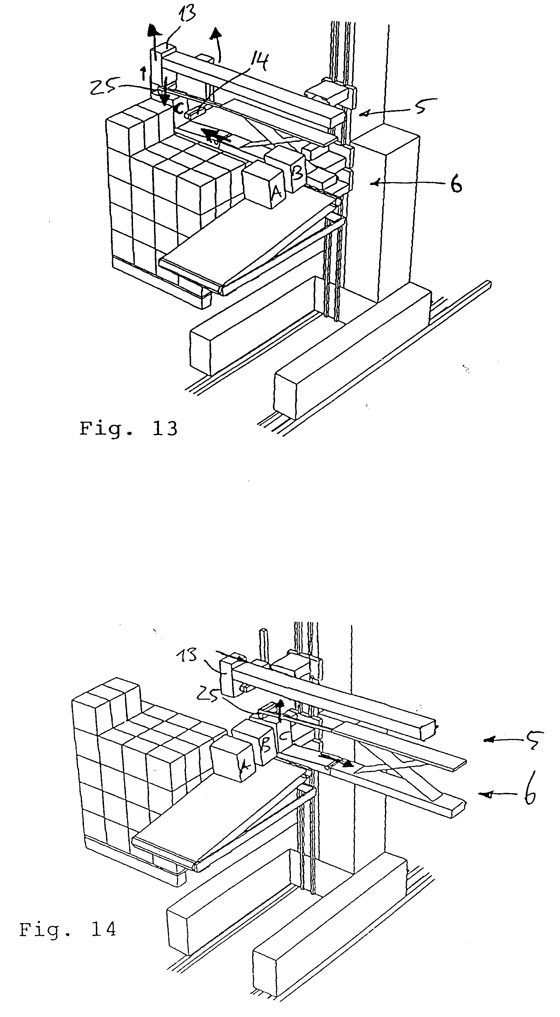

Nun wird (Fig. 13) der Artikel C durch Anheben des Anstellorgans 14 gekippt. Gleichzeitig wird die Messvorrichtung 13 rsp. das ganze Kipporgan 5 etwas hochgefahren, so dass zwischen der Oberseite des Artikels C und der Messvorrichtung 13 genügend Platz zum Einfahren des Halteelements 25 besteht. Das Aufnahmeorgan 6 wird ausgefahren und ergreift den Artikel C. Das Anstellorgan 14 und die Platte 17 werden hochgezogen.

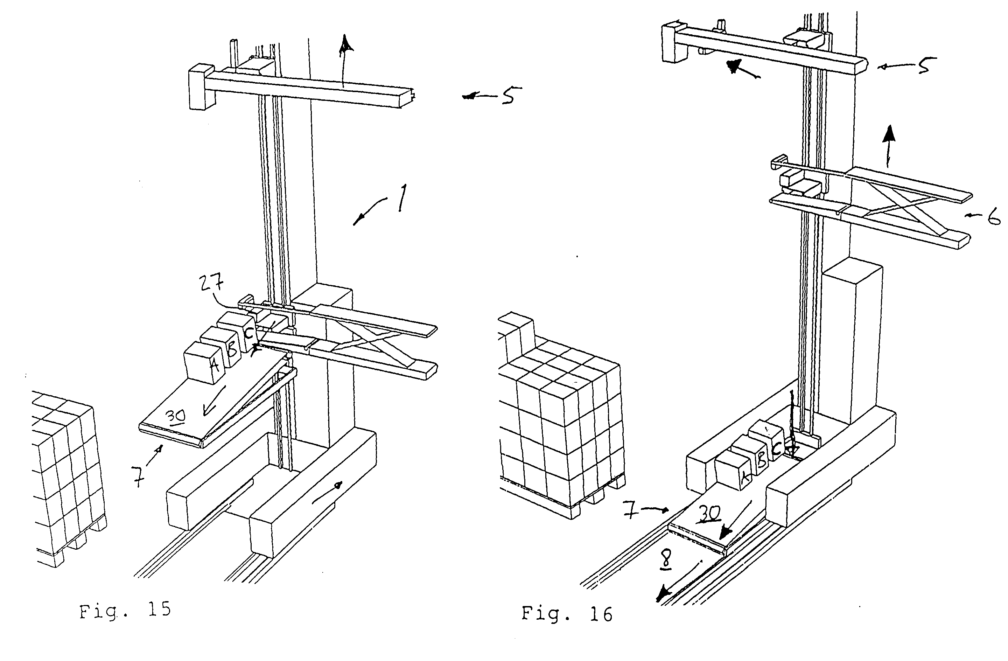

Wir nehmen an, dass nun in einem nächsten Schritt ein anderer Artikelstapel bearbeitet werden soll. Deshalb werden nun sowohl das Kipporgan 5 als auch das Aufnahmeorgan 6 zurückgezogen (Fig. 14). Dabei erreicht Artikel C die Abgabeposition und das Halteelement 25 wird angehoben. Nun wird die Ausstossvorrichtung 27 betätigt, um den Artikel C auf das Zwischenlager 7 zu übertragen (Fig. 15). Das Förderband 30 des Zwischenlagers 7 wird in Betrieb gesetzt, um Platz für Artikel C zu machen. Gleichzeitig wird das Bedienfahrzeug 1 seitlich zum nächsten zu bearbeitenden Stapel verfahren und das Kipporgan 5 auf die entsprechende Arbeitshöhe gebracht.

Sobald der Artikel C auf dem Zwischenlager 7 liegt, wird dieses in den Bodenbereich des Bedienfahrzeugs gefahren (Fig. 16). Dort wird das Förderband 30 in Betrieb gesetzt und gibt die Artikel an das Transportband 8 ab. Diese Abgabe kann auch stattfinden, während das Bedienfahrzeug noch fährt. Wenn die Artikel das Zwischenlager 7 verlassen haben, kann dieses wieder zum Aufnahmeorgan 6 gefahren werden.

Nach der Abgabe des Artikels C an das Zwischenlager 7 wird das Aufnahmeorgan 6 ebenfalls auf die Arbeitshöhe zur Bearbeitung des nächsten Stapels gebracht.

Sobald das Bedienfahrzeug die Position des nächsten Stapels (nicht gezeigt) erreicht hat, kann das Kipporgan 5 ausgefahren werden, um den nächsten Artikel zu kippen.

Zusammenfassend kann also gesagt werden, dass das Kipporgan 5 und das Aufnahmeorgan 6 weitgehend unabhängig voneinander arbeiten. Während das Aufnahmeorgan noch mit dem Abtransport eines ersten Artikels beschäftigt ist, wendet sich das Kipporgan bereits dem nächsten Artikel zu, misst dessen Position und hebt ihn an. Damit wird also in einer ersten Arbeitsphase A, wie sie z. B. in den Figuren 3 - 5, 8, 9 und 12 gezeigt wird, der Artikel vom Kipporgan 5 vermessen und gekippt und, soweit vorhanden, ein früher aufgenommener Artikel vom Aufnahmeorgan 6 abtransportiert. In einer zweiten Arbeitsphase B, die in den Figuren 6 und 10 illustriert ist, wird der vom Kipporgan 5 angehobene Artikel vom Aufnahmeorgan 6 unterfahren. Beim Aufnehmen mehrerer Artikel durchläuft die Vorrichtung nacheinander zyklisch die Arbeitsphasen A und B. Dabei müssen die Arbeitsabläufe von Kipporgan 5 und Aufnahmeorgan 6 nur in den Phasen B aufeinander abgestimmt sein. In den Arbeitsphasen A führen die beiden Organe ihre Arbeiten im wesentlichen unabhängig voneinander durch. Deshalb können in der Phase A jeweilen zwei Artikel gleichzeitig bearbeitet werden. In der Phase B, die verglichen mit Phase A kurz ist, geht ein Artikel von der Verantwortlichkeit des Kipporgans 5 in die Verantwortlichkeit des Aufnahmeorgans 6 über.

Eine weitere Leistungssteigerung wird dadurch erreicht, dass die Artikel vom Aufnahmeorgan 6 relativ rasch an das Zwischenlager 7 übergeben werden. Nach dieser Uebergabe können das Aufnahmeorgan 6 und das Zwischenlager 7 wieder unabhängig voneinander arbeiten. So kann das Zwischenlager 7 zum Beispiel zum Transportband 8 gefahren werden, während das Aufnahmeorgan 6 in eine geeignete Arbeitsposition geführt wird (vgl. Fig. 16) oder während das Aufnahmeorgan 6 einen nächsten Artikel vom Stapel holt.

Durch die sequentielle Bearbeitung der Artikel in zwei rsp. drei Schritten und die kurzen Uebergabezeiten zwischen den Organen 5, 6, 7 wird also eine hohe Parallelität der Verarbeitung und eine entsprechend hohe Frequenz von z. B. 400 Artikeln pro Stunde erreicht. Für die einzelnen Arbeitsschritte besteht trotzdem mehr Zeit, so dass es zum Beispiel möglich ist, die Position eines Artikels vor dem Aufnehmen auszumessen. Damit erhöht sich die Zuverlässigkeit der Anlage und deren Toleranz gegenüber schlecht platzierten Artikeln.

Zur Unterstützung der Arbeitsaufteilung sollten alle Organe (Kipporgan 5, Aufnahmeorgan 6 und Zwischenlager 7) so ausgestaltet sein, dass jedes Organ alle Arbeiten ausser der Uebergabe unabhängig von den anderen Organen durchführen kann. Deshalb ist das Aufnahmeorgan mit dem Halteorgan 25 ausgerüstet, so dass es den Artikel ohne Hilfe des Kipporgans festhalten kann. Auch sind alle Organe mit eigenen Horizontal- bzw. Vertikalantrieben versehen.

Die Uebergaben der Artikel zwischen den einzelnen Organen sollten schnell erfolgen. In der gezeigten Ausführung ist zum Beispiel die Uebergabe zwischen Aufnahmeorgan 6 und Zwischenlager 7 darum schnell, weil der Artikel nur über die Breite des Aufnahmeorgans verschoben werden muss. Dies geschieht mittels der Stosseinrichtung 27 in schneller und effizienter Weise.

Prinzipiell eignet sich das erfindungsgemässe Verfahren jedoch auch zum Betrieb bereits bestehender Anlagen.

## Patentansprüche

1. Verfahren zum Betrieb einer Vorrichtung zur Aufnahme von Artikeln, wobei die Vorrichtung ein Kipporgan (5) zum Anheben eines aufzunehmenden Artikels (A, B, C) sowie ein Aufnahmeorgan (6) zum Unterfahren und Aufnehmen des gekippten Artikels und zum Abtransportieren dieses Artikels aufweist, dadurch gekennzeichnet, dass zum Aufnehmen mehrerer Artikel nacheinander zyklisch Arbeitsphasen A und B durchlaufen werden, wobei in der Arbeitsphase A das Kipporgan bei einem ersten aufzunehmenden Artikel positioniert wird, und diesen anhebt, in der Arbeitsphase B das Aufnahmeorgan unter den angehobenen ersten Artikel ausgefahren wird, in der nächsten Arbeitsphase A das Kipporgan bei einem zweiten aufzunehmenden Artikel positioniert wird und diesen anhebt, wobei gleichzeitg das Aufnahmeorgan mit dem aufgenommenen ersten Artikel eingefahren wird und den ersten Artikel zu einer Abgabestation führt, wo er vom Aufnahmeorgan abgegeben wird, und dass in der nächsten Arbeitsphase B das Aufnahmeorgan unter den angehobenen zweiten Artikel geführt wird.

2. Verfahren nach Anspruch 1, dadurch gekennzeichnet, dass im Kipporgan eine Messvorrichtung (13) zur Ausmessung der Position des aufzunehmenden Artikels angeordnet ist, wobei in der Arbeitsphase A vor dem Anheben des aufzunehmenden Artikels dessen genaue Position mit der Messvorrichtung bestimmt wird.

3. Verfahren nach einem der vorangehenden Ansprüche, dadurch gekennzeichnet, dass die aufzunehmenden Artikel von der Abgabestation an eine Zwischenlagerstation (7) übergeben werden, wo jeweilen mehrere Artikel zwischengelagert werden.

4. Verfahren nach Anspruch 3, dadurch gekennzeichnet, dass die Zwischenlagerstation in zeitlichen Abständen die zwischengelagerten Artikel an eine Abtransporteinrichtung (8) übergibt.

5. Vorrichtung zur Aufnahme von Artikeln, welche ein Kipporgan (5) zum Anheben der aufzunehmenden Artikel (A, B, C) und ein Aufnahmeorgan (6) zum Unterfahren der angehobenen Artikel aufweist, wobei das Aufnahmeorgan (6) hierzu unter den angehobenen Artikel ausfahrbar ist, gekennzeichnet durch ein unabhängig vom Kipporgan (5) bewegbares Halteorgan (23 - 25), welches zur Unterstützung des Aufnehmens des Artikels auf das Aufnahmeorgan (6) von oben auf den aufzunehmenden Artikel führbar ist, wobei das Aufnahmeorgan(6) mit einem ersten Artikel einfahrbar ist, während gleichzeitig mit dem Kipporgan (5) ein zweiter Artikel anhebbar ist.

6. Vorrichtung nach Anspruch 5, dadurch gekennzeichnet, dass das Halteorgan (23 - 25) mit dem Aufnahmeorgan (6) verbunden ist, und dass das Aufnahmeorgan (6) und das Halteorgan (23 - 25) mittels eines gemeinsamen Antriebs (28, 29) gegen den aufzunehmenden Artikel ausfahrbar sind.

7. Vorrichtung nach einem der Ansprüche 5 oder 6, dadurch gekennzeichnet, dass am Kipporgan (5) eine Messvorrichtung (13) zur Messung der Position des aufzunehmenden Artikels angeordnet ist.

8. Vorrichtung nach einem der Ansprüche 5 bis 7, dadurch gekennzeichnet, dass sie ein Zwischenlager (7) zur Zwischenlagerung mehrerer Artikel aufweist, wobei ein in einer Abgabestation des Aufnahmeorgans (6) befindlicher Artikel in das Zwischenlager (7) überführbar ist.

9. Vorrichtung nach Anspruch 8, dadurch gekennzeichnet, dass sie eine Abtransporteinrichtung (8) umfasst, und dass im Zwischenlager (7) befindliche Artikel zum Wegtransport auf die Abtransporteinrichtung (8) überführbar sind.

10. Vorrichtung nach Anspruch 9, dadurch gekennzeichnet, dass die Abtransportvorrichtung (8) in einem Bodenbereich der Vorrichtung angeordnet ist, und dass das Zwischenlager (7) in vertikaler Richtung zwischen dem Aufnahmeorgan (6) und der Abtransportvorrichtung (8) verfahrbar ist.

## Claims

1. Method for operating a device for picking up articles, wherein the device comprises a tilting member (5) for lifting an article (A, B, C) to be picked up as well as a pickup member (6) for being driven below and for lifting the tilted article and for transporting off this article, characterised in that for picking up several articles operating phases A and B are used cyclically one after each other, wherein in operating phase A the tilting member is positioned at a first article to be picked up and lifts the same, in operating phase B the pickup member is extended below the lifted first article, in the next operating phase A the tilting member is positioned at a second article to be picked up and lifts the same while simultaneously the pickup member with the first picked up article is retracted and guides the first article to a transfer location where it is transferred from the pickup member, and that in the next operating phase B the pickup member is led below the lifted second article.

2. Method of claim 1 characterised in that a measuring device (13) for measuring the position of the article to be picked up is arranged in the tilting member, wherein in the operating phase A prior to lifting the article to be picked up its exact position is determined by means of the measuring device.

3. Method of one of the preceding claims characterised in that the articles to be picked up are transferred from the transfer location to an intermediate storage location (7), where several articles are intermediately stored simultaneously.

4. Method of claim 3 characterised in that the intermediate storage location transfers the intermediately stored articles to a removal device (8) from time to time.

5. Device for picking up articles, which comprises a tilting member (5) for lifting the articles (A, B, C) to be picked up and a pickup member (6) for being driven below the lifted articles, wherein, for this purpose, the pickup member (6) can be extended below the lifted article, characterised by holding member (23 - 25) that can be moved independently from the tilting member (5), which, for supporting the picking up of the article onto the pickup member (6), can be moved from above onto the article to be picked up, wherein the pickup member (6) can be retracted with a first article while simultaneously a second article can be lifted by the tilting member (5).

6. Device of claim 5, characterised in that the holding member (23 - 25) is connected to the pickup member (6) and that the pickup member (6) and the holding member (23 - 25) can be extended against the article to be picked up by means of a common drive (28, 29).

7. Device of one of the claims 5 or 6, characterised in that a measuring device (13) for measuring the position of the article to be picked up is arranged at the tilting member (5).

8. Device of one of the claims 5 to 7, characterised in that it comprises an intermediate storage (7) for intermediately storing several articles, wherein an article located in a transfer location of the pickup member (6) can be transferred to the intermediate storage (7).

9. Device of claim 8, characterised in that it comprises a removal device (8) and that articles located in the intermediate storage (7) can be transferred for removal onto the removal device (8).

10. Device of claim 9, characterised in that the removal device (8) is arranged in a bottom area of the device and that the intermediate storage (7) can be displaced in vertical direction between the pickup member (6) and the removal device (8).

## Revendications

1. Procédé pour la mise en action d'un dispositif pour prendre des objets, le dispositif comportant un organe de basculement (5) pour soulever un objet (A, B, C) à prendre ainsi qu'un organe récepteur (6) pour s'insérer sous l'objet et le recevoir lorsqu'il est basculé et pour l'amener ailleurs, caractérisé en ce que pour prendre successivement plusieurs objets on parcourt de façon cyclique des phases de travail successives A et B, l'organe de basculement étant positionné près d'un premier objet à prendre et soulevant celui-ci lors de la phase A, l'organe récepteur étant introduit sous ce premier article soulevé lors de la phase B, l'organe de basculement étant positionné près d'un second objet à prendre et soulevant celui-ci lors de la phase A suivante, cependant que l'organe récepteur portant l'article à prendre en premier est simultanément rétracté et amène le premier objet à une station de dépôt où cet objet est déposé par l'organe récepteur, et en ce que lors de la phase B suivante l'organe récepteur est amené sous l'objet soulevé en second lieu.

2. Procédé selon la revendication 1, caractérisé en ce que l'organe de basculement comporte un instrument de mesure (13) pour déterminer la position de l'objet à prendre, cette position étant exactement mesurée à l'aide de l'instrument de mesure lors de la phase A, avant de soulever l'objet à prendre.

3. Procédé selon une des revendications précédentes, caractérisé en ce que les objets à prendre sont transférés de la station de dépôt à une station de stockage intermédiaire (7) où plusieurs objets sont provisoirement stockés.

4. Procédé selon la revendication 3, caractérisé en ce que la station de stockage intermédiaire transfère périodiquement les objets provisoirement stockés à un dispositif d'évacuation (8).

5. Dispositif pour prendre des objets, comprenant un organe de basculement (5) pour soulever les objets (A, B, C) à prendre et un organe récepteur (6) pour s'introduire sous les objets soulevés, cet organe récepteur (6) pouvant pour cela être avancé sous l'objet soulevé, caractérisé par un organe préhenseur (23 - 25) mobile pouvant être mû indépendamment de l'organe de basculement (5), cet organe préhenseur étant amené depuis le haut sur l'objet à prendre pour faciliter son chargement sur l'organe récepteur (6), celui-ci pouvant être rétracté avec un premier objet tandis qu'un second objet est simultanément en état d'être soulevé par l'organe de basculement (5).

6. Dispositif selon la revendication 5, caractérisé en ce que l'organe préhenseur (23 - 25) est relié à l'organe récepteur (6) et que l'organe récepteur (6) et l'organe préhenseur (23 - 25) peuvent être avancés vers l'objet à prendre au moyen d'un dispositif d'actionnement commun (28, 29).

7. Dispositif selon une des revendications 5 ou 6, caractérisé en ce qu'un instrument de mesure (13) pour mesurer la position de l'objet à prendre est agencé sur l'organe de basculement (5).

8. Dispositif selon une des revendications 5 à 7, caractérisé en ce qu'il comporte une station de stockage intermédiaire (7) pour le stockage provisoire de plusieurs objets, un objet se trouvant dans une station de dépôt de l'organe récepteur (6) étant transférable à cette station de stockage intermédiaire (7).

9. Dispositif selon la revendication 8, caractérisé en ce qu'il comporte un dispositif d'évacuation (8) et en ce que des objets situés dans la station de stockage intermédiaire (7) sont transférables sur ce dispositif d'évacuation (8) pour être évacués.

10. Dispositif selon la revendication 9, caractérisé en ce que le dispositif d'évacuation (8) est disposé au fond du dispositif et que la station de stockage intermédiaire (7) peut être déplacée verticalement entre l'organe récepteur (6) et le dispositif d'évacuation (8).
